# EUROPÄISCHE PATENTSCHRIFT

(11) **EP 0 599 145 B1**
(45) Veröffentlichungstag und Bekanntmachung des Hinweises auf die Patenterteilung: **29.01.1997**
(21) Anmeldenummer: 93118273.7
(22) Anmeldetag: 11.11.1993
(51) Int. Cl.: B29D 29/08, B29C 43/02

(54) **Verfahren zur Herstellung eines Zahnriemens und Zahnriemen**
Process for the manufacturing of a toothed belt and a toothed belt
Procédé pour la fabrication d'une courroie dentée et courroie dentée

(30) Priorität: 27.11.1992 DE 4239891
(43) Veröffentlichungstag der Anmeldung: 01.06.1994
(73) Patentinhaber: Continental Aktiengesellschaft, 30165 Hannover (DE)
(72) Erfinder: Meschede, Ludger, Dr., D-30163 Hannover (DE); Müller, Andreas, D-29336 Nienhagen (DE); Berger, Ralf, D-30559 Hannover (DE); Müller, Paul, D-30926 Seelze-Letter (DE); Kock, Wolfgang, Dr., D-30177 Hannover (DE)

(56) Entgegenhaltungen:
- EP-A- 0 153 049
- EP-A- 0 285 406
- EP-A- 0 326 232
- EP-A- 0 466 346
- US-A- 4 343 666
- US-A- 4 626 232
- PATENT ABSTRACTS OF JAPAN vol. 7, no. 189 (M-237)(1334) 18. August 1983 & JP-A-58 091 947 (MITSUBOSHI BELTING K.K.) 1. Juni 1983

## Beschreibung

Die Erfindung bezieht sich auf ein Verfahren zur Herstellung eines Zahnriemens gemäß dem Oberbegriff des Anspruchs 1 sowie auf einen Zahnriemen gemäß dem Oberbegriff des Anspruchs 9. Ein Verfahren dieser Art und so hergestellte Zahnriemen sind bekannt. Ihr wichtigstes Anwendungsgebiet ist der Antrieb obenliegender Nockenwellen von je einer Kurbelweile aus bei Verbrennungsmotoren. In dieser Anwendung konkurrieren sie mit den noch vor 15 Jahren vorherrschenden Kettentrieben (heute nur noch ca. 20 % Anteil) und nicht-umschlingenden Getrieben - insbesondere Stirnradsätze, Königswellengetriebe, Stangengetriebe - , die alle zusammen einen Anteil unter 1 % auf sich vereinigen.

Üblicherweise bestehen Nockenwellen antreibende Zahnriemen im wesentlichen aus Gummi - seit jüngstem mit hohem HNBR-Anteil - und ihre verzahnte Peripherie ist durch ein Armierungsgewebe verstärkt. Zur Konfektion solcher Riemen wird zunächst auf eine trommelförmige - noch kühle aber zur Vulkanisation heizbare - Form, die axial verlaufende, die Riemenzähne abformende Nuten aufweist, ein Armierungsgewebe gelegt. Der Festigkeitsträgerstrang wird durch Aufspulen eines oder mehrerer Festigkeitsträger zu einer ggf. mehrgängigen Wendel erzeugt. Die Kautschukmischung wird danach von radial außen nach radial innen durch die Spalten zwischen den einzelnen Festigkeitsträgern des Zugstranges hindurch gedrückt.

Gegenüber den Kettentrieben zeichnen sich Zahnriementriebe insbesondere durch bessere Längenkonstanz und in der Regel geringeres Gewicht aus. Außerdem sind sie bei Kontrolle und evt. Austausch leichter zugänglich, weil sie nicht im ölgeschmierten Motorgehäuse sondern außerhalb - nur hinter einer Staubkappe - angeordnet sind.

Zahnriemen werden auch in Büromaschinen z. B. Plottern und Druckern verwendet und bestehen dort überwiegend aus leichter zu formendem aber weniger temperaturbeständigem Polyurethan. Solche Riemen brauchen nicht ringförmig zu sein und sind meistens frei von Armierungsgewebe.

Die Funktionen der Krafteinleitung (Zahnflanken) und der Kraftweiterleitung (Zugstrang) sind beim Zahnriemen radial geschichtet, bei der Kette (rollenbewehrte Bolzen zur Krafteinleitung, Laschen zur Weiterleitung) axial geschichtet. Die radiale Schichtung hat den Vorzug, die volle Breite zur Krafteinleitung nutzen zu können, was kleine Flächenpressungen bei erträglicher Baubreite ermöglicht. Sie hat aber auch den Nachteil, daß die Krafteinleitungsstellen, also die Zähne, in einer zur Seitenansicht parallelen Ebene erheblich auf Biegung beansprucht werden. Die hierdurch bedingte Verformung des Gummizahnes verflacht den Kraftangriffswinkel und kann zum gefürchteten Zahnüberspringen führen. Dieser Gefahr wird durch eine ausreichende Riemenvorspannung, neuerdings durch nicht-konjugierte Verzahnungsgeometrien und durch eine ausreichend steife Gummiqualität begegnet.

Besonders die Motorenbauer verlangen weitere Verbesserungen des Leistungsgewichtes und des maximal übertragbaren Drehmomentes. Wenngleich hiernach die Polyurethanriemen-Kunden weniger heftig nachfragen, so ergibt eine Leistungsgewichtverbesserung auch in diesem Marktsegment einen Vorteil.

Von dieser Aufgabenstellung ausgehend bot sich zunächst eine Erhöhung der Riemenvorspannung an. Der Übergang auf noch zugfestere Fasern für den Festigkeitsträgerstrang - üblicherweise Glasfasern - erschien möglich, führt jedoch zu einer Erhöhung der umlaufenden Blindleistung, was insbesondere in den Phasen geringer Nutzleistung den Wirkungsgrad verschlechtert. Dies erhöht nicht nur den Treibstoffverbrauch, sondern führt überdies zu erhöhter Riemenaufheizung, was wiederum mit dem Ziel langer Riemenlebensdauer bzw. zunehmender Kapselung der Motorräume kollidiert. Diese Möglichkeit wurde deshalb verworfen.

Durch Variation der Verzahnungsgeometrie scheint keine weitere Steigerung der aufs Baugewicht bezogenen maximalen Übertragungsleistung möglich zu sein.

So wurde eine weitere Erhöhung der Gummihärte der Riemenzähne erwogen. Die Härte läßt sich dadurch erhöhen, daß mehr verstärkender Füllstoff, insbesondere Ruß, zugegeben wird. Nachteiligerweise wird dann schon die Rohmischung zäher und ist dadurch nicht nur schwerer zu mischen, sondern auch kaum noch durch den Festigkeitsträgerstrang zu drücken. Durch eine höhere Vernetzungsstellendichte die Steifigkeit zu erhöhen, ist beim für Zahnriemen zu bevorzugenden vollhydrierten Nitrilkautschuk (HNBR), der peroxydisch zu vernetzen ist, anders als bei schwefelvernetzbaren Kautschuktypen, z. B. teilhydriertem Nitrilkautschuk, nicht ohne weiteres möglich; außerdem führt eine erhöhte Vernetzungsstellendichte in aller Regel zu verringerter Ermüdungsbeständigkeit, was für hochdynamisch belastete Zahnriemen nicht hinnehmbar ist. So wurde auch dieser Ansatz verworfen.

Überdies stieß der zuvor diskutierte Vorschlag, die Mischungssteifigkeit zu erhöhen, auf die grundsätzliche Kritik, daß hierdurch das Laufgeräusch erhöht würde.

Schließlich erwogen die Erfinder eine Faserverstärkung, wie sie insbesondere in der EP-A-0 326 232 und der darauf offenbar aufbauenden WO-A-88/00879 gelehrt wird. Neben einer erheblichen Verteuerung der Riemen dadurch, daß nacheinander zwei verschiedene Kautschukmischungen aufzubringen sind, die zudem durch eine exakte Grenze voneinander getrennt sein sollen, zeigten diese Riemen nicht ganz das erhoffte mechanische Verhalten. Auch die weiter in Betracht gezogenen EP-A-0 285 406, US-A-4,690,664, US-A-4,533,420 und EP-A-0 466 346 wiesen keinen Ausweg.

Die Erfinder fanden schließlich eine den Konflikt zwischen den verschiedenen Entwicklungszielen zwar nicht auflösende aber immerhin, wie erste Versuche bewiesen, die Kompromisse auf ein höheres Niveau bringende Lösung: Sie besteht erfindungsgemäß darin, besagter Polymermischung auf Basis eines oder mehrerer Polymere, vorzugsweise HNBR-Kautschuk oder Polyurethan, vor dem Durchdrücken zwischen den besagten Festigkeitsträgern des Zugstranges hindurch Fasern aus einem Längenbereich von 0,1 bis 5 mm in einer Konzentration in Polymer-Masseprozenten zwischen 0,5 % und 20 % beizumischen und so auszurichten, daß sie - vor dem Durchdrücken - im wesentlichen parallel zu den Festigkeitsträgern des Zugstranges verlaufen.

Diese Formulierung der Lösung geht davon aus, daß das bewährte Verfahren zur Fertigung faserloser Zahnriemen nächstliegender Stand der Technik ist. Hierfür spricht, daß die zur Konfektion - in der Kautschukindustrie wird die Konfektion als die zentrale Etappe der Fertigung angesehen - der Riemen nötigen Handlungen gegenüber der Konfektion faserloser Riemen völlig unverändert sind; alle geänderten Handlungen, nämlich die Beimischung der Fasern, erfolgen vor der Konfektion und die Änderungen während der Konfektion betreffen nicht während ihr auszuführende Handlungen sondern während ihr eintretende Wirkungen der vor der Konfektion erfolgenden Faserbeimischung.

Würde hingegen die EP-PA 0 326 232 als nächstliegender Stand der Technik betrachtet, wofür ein Vergleich der Endprodukte, also der Zahnriemen sprechen mag, so ist als entscheidender Unterschied hervorzuheben, daß erfindungsgemäße Zahnriemen aus einer einzigen Polymermischung gebildet sind, die in überall gleicher Konzentration Fasern enthält. Insbesondere enthält also auch der (unverzahnte) Riemenrücken und der im Längsschnitt mittige Bereich der Zahnwurzeln Fasern. Demzufolge fehlt jegliche Grenze zwischen Gummiqualitäten und jegliche Veranlassung für eine - wegen der nötigen Zwischenkühlung komplizierten und energieaufwendigen - Vorvulkanisation einer zuerst eingebrachten - faserhaltigen - Kautschukmischung und anschließendem Einbringen einer zweiten Kautschukmischung. Mag die Erfinder dieser Entgegenhaltung noch die Befürchtung einer zu sehr verringerten Biegewilligkeit davon abgehalten haben, auch im Riemenrücken Fasern anzuordnen, so haben die Erfinder der hier vorgestellten Erfindung erkannt, daß es sowohl für die Verfahrensweise, besonders dessen Kosten, als auch das Endprodukt, besonders dessen maximalübertragbare Drehmoment, von Vorteil ist, alle im Zahnriemen verwendete Polymer- bzw. Kautschukmischungen mit Fasern zu versetzen. Die Erhöhung der Material- und Mischkosten wegen des Mehreinsatzes von Fasern wird mehr als aufgewogen durch die raschere und weniger Energie zehrende Konfektion. Die tatsächlich leicht erhöhte Biegesteifigkeit erfindungsgemäßer Zahnriemen führt zu keiner meßbaren Erhöhung der Walkverluste, im Gegenteil weisen die Ergebnisse darauf hin, daß die Walkverluste sogar ein wenig gesenkt sind. Dieses überraschende Ergebnis beruht möglicherweise darauf, daß die geringe Verformung der Fasern nahezu hysteresefrei erfolgt und im wesentlichen Walkarbeit nur vom Gummi aufgenommen wird, dessen Hysterese und dessen Verformungswege aber unverändert geblieben sind. Die sich sogar abzeichnende Senkung der Walkverluste mag daran liegen, daß der vermehrte - hysteresearme - Fasereinsatz die Menge des pro Bauvolumen eingesetzten Kautschukes zwangsläufig mindert.

Im übrigen können erfindungsgemäße Zahnriemen aufgrund der Faserhaltigkeit (auch) ihres Rückens und der damit einhergehenden Abriebminderung gegenüber Umlenk- und Spannrollen mit dünnerem Rücken ausgeführt sein, wodurch sich nicht nur das Gewicht mindert und die Walkverluste noch weiter abnehmen, sondern auch die Biegesteifigkeit abnimmt.

Die Beimischung der Fasern und deren Ausrichtung in Riemenumfangsrichtung führt zu einem anisotropen Verhalten des Endproduktes: Gegenüber Biegungen in der Seitenansicht ist jeder Riemenzahn biegesteifer, gegenüber allen anderen Verformungsarten ist er nahezu unverändert flexibel. Wegen weitgehender Erhaltung der Weichheit senkrecht zur Flankenoberfläche ist die von der Winkelfehlstellung, Radkonizität und Radballigkeit abhängige Geräuschzunahme bei erfindungsgemäßen Riemen praktisch identisch zu Riemen mit nicht faserverstärkten Zähnen.

Zweckmäßige Weiterbildungen des Verfahrens nach Anspruch 1 sind in den Ansprüchen 2 bis 8 beschrieben.

Mit der bevorzugten Weiterbildung der Erfindung, wonach die Fasern im Bereich der Zahnflanken im wesentlichen in Umfangsrichtung und parallel zu den Flanken verlaufen, ist überdies die Abfederung des Aufschlagimpulses nahezu unvermindert gegenüber einem Riemen mit nicht faserbewehrten Zähnen. Die Laufgeräuschzunahme bei gleicher Riemenbemessung ist also gering; wird ein faserloser Riemen mit einem schmaleren faserbewehrten Riemen gleicher Leistung verglichen, so ist sogar ein geringfügig niedrigeres Geräusch zu messen.

Gegenüber einer Faserbewehrung nur in einer radial inneren Schicht bietet die Erfindung den Vorteil, daß der von den Erfindern herausgefundene "Streckeffekt" nicht eintritt. Dieser Effekt beruht darauf, daß jeder ondulierte Festigkeitsträger bei Belastung auf Zug sich primär gerade streckt, und im wesentlichen erst nach erreichter Streckung - dann mit größerer Steifigkeit - sich in sich dehnt.

Eine faserbewehrte radial innere Schicht verhält sich aber aufgrund erhöhter Zugsteifigkeit gegenüber einer radial äußeren nicht faserbewehrten Schicht wie ein gewellter Festigkeitsträger. Bei der unvermeidlichen Tendenz zur Streckung der radial inneren Schicht kann im Zahneingriff die radial äußere Extremlage der Welle, also die radial innere Seite des Steges, nicht nach radial innen ausweichen, weil Zahnriemen üblicherweise im Stegbereich spiel frei auf ihren Zahnrädern aufsetzen. Hingegen kann die radial innere Extremlage der Welle, also der Riemenzahnkopfbereich, nach radial außen ausweichen. Der Streckeffekt erhöht also die nachteilige Tendenz der Riemenzähne, aus den Radlücken nach radial außen herauszuwandern. Um das in der Regel zum Motortotalschaden führende Zahnüberspringen auszuschließen, müssen solche Riemen mit steileren Flanken und/oder höherer Riemenzugsteifigkeit ausgeführt werden und/oder mit höherer Vorspannung betrieben werden.

An erfindungsgemäßen Zahnriemen ist der Streckeffekt zwar auch zu beobachten, wird aber in seinen schädlichen Auswirkungen dadurch kompensiert, daß die Riemenzugsteifigkeit in höherem Maße durch die Faserfüllung erhöht ist, weil erfindungsgemäß auch im Riemenrücken versteifende Fasern angeordnet sind, die zudem im wesentlichen gestreckt verlaufen.

Die gelehrte Faserausrichtung ist nicht nur vom Endprodukt her betrachtet vorteilhaft, sondern führt zusammenwirkend mit der Längenangabe auch dazu, daß sich die fasergefüllte Mischung ohne zu großen Aufwand zwischen den Fäden des Festigkeitsträgerstranges hindurch drücken läßt. Diese Faserausrichtung läßt sich einfach dadurch erreichen, daß die faserhaltige Kautschukmischung extrudiert und/oder kalandriert wird und das Extrudat bzw. Kalandrat so auf den aufgespulten Festigkeitsstrang aufgelegt wird, daß die Extrusions- bzw. Kalandrierrichtung mit der Festigkeitsträgerrichtung zusammenfällt.

Dieses bevorzugte Verfahren zur Herstellung erfindungsgemäßer Zahnriemen führt im Querschnitt zu einem Faserverlauf, der kleine Wirbel unterhalb eines jeden Festigkeitsträgers des Zugstranges zeigt, im Längsschnitt jedoch praktisch wirbelfrei ist.

Der Faserverlauf im Längsschnitt läßt sich als Feld einander ähnlicher Wellen darstellen, deren Amplitude an der radial äußeren (bezogen auf kompletten Riementrieb) Peripherie gleich Null ist und nach radial innen hin stetig zunimmt, bis die wellenartige Feldlinie an der radial inneren Peripherie eben dieser Peripherie genau folgt. Während sich die Faserrichtung gut als Feld beschreiben läßt, trifft dies auf die Faserkonzentration (lokales Faservolumen bezogen auf Gummivolumen) nicht zu: Die Faserkonzentration ist praktisch gleichmäßig.

Die tangential zur Peripherie verlaufenden Fasern scheinen die Oberflächeneigenschaften etwas zu verändern und zwar hin zu einem kleineren Reibungsbeiwert und geringerem Abrieb am Riemen, letzteres möglicherweise wegen geringerer Relativbewegung zwischen Riemenzahnoberfläche und Radzahnlücke.

Bei der näher liegenden Alternative, erst die faserhaltige Kautschukmischung aufzubringen und dann erst den Festigkeitsträgerstrang aufzuspulen, ergeben sich Faseranhäufungen im Bereich der Stege, was deren Funktion als Biegegelenk beeinträchtigt. Ein weiterer Vorteil des erfindungsgemäßen Verfahrens gegenüber dieser Alternative liegt darin, daß mit ihm weniger von dem für faserlose Zahnriemen bewährten Herstellungsverfahren geändert zu werden braucht.

Als beizumischende Fasern haben sich besonders Aramid-Fasern bewährt. Sie weisen ein hohe Festigkeit auf, sind in großer Feinheit erhältlich - bevorzugte Einzelfaserdurchmesser zwischen 8 und 12 µm - sind hinreichend temperaturbeständig für das Verteilen in der Kautschukmischung, senken die Fließwilligkeit der Rohmischung kaum und ergeben eine hohe und ermüdungsbeständige Haftung an für Zahnriemen zu bevorzugenden Kautschukmischungen.

In an sich bekannter Weise sollte für Riemen im Motorenbau der Polymeranteil der - nun mit Fasern anzureichernden - Polymermischung zu mindestens 70 % aus voll- oder teil-hydriertem Nitrilkautschuk (HNBR) bestehen. So bleiben die in dieser Anwendung wichtigen Eigenschaften der Beständigkeit gegen Benzin, Schmierstoffe, Wärme und Abrieb zumindest erhalten.

Auch für Kunststoff-Zahnriemen, wenngleich bislang nur für das überwiegend verwendete PU (Polyurethan) überprüft, scheint die Erfindung anwendbar zu sein. Es könnten sich allerdings etwas abriebbeständigere Werkstoffe für die Zahnräder empfehlen.

Die oben angeführte Aufgabe wird auch durch einen Zahnriemen gemäß Anspruch 9 gelöst. Dieser erfindungsgemäße Zahnriemen enthält - incl. Rücken - Fasern aus einem Längenbereich von 0.1 - 5 mm, die gemittelt über einer in Umfangsrichtung verlaufenden Schnittfläche des Zahnriemens 0,5 % bis 6,5 % des Volumens einnehmen.

Zweckmäßige Weiterbildungen des erfindungsgemäßen Zahnriemen sind in den Ansprüchen 10 bis 14 beschrieben.

Da bei perfekt hergestellten Riemen die Fasern nicht mehr aus der Polymermischung getrennt werden können, ist hier die Dosierung nicht als Verhältnis der Fasermasse zur Gesamtmasse all der Mischungsbestandteile, die Polymere sind (Kautschukmassenprozent), sondern als Verhältnis des Faservolumens zum Gesamtvolumen einer Probe aus den Riemenzähnen angegeben; dieses Verhältnis kann mit optischer Vergrößerung eines Schnittes - vorzugsweise Querschnittes - nachgewiesen werden.

Die Erfindung wird nachfolgend anhand einer Figur näher erläutert, die ausschnittsweise einen Längsschnitt durch einen erfindungsgemäßen Zahnriemen zeigt. Die radial äußere (ungezahnte) Peripherie ist mit 1, der Festigkeitsträgerstrang mit 2, die radial innere (gezahnte) Peripherie mit 3 und die im Gummi eingebetteten Fasern sind mit 4 bezeichnet. Weiterhin sind in durchgezogener Linie einige Feldlinien 5 eingezeichnet zur übersichtlicheren Darstellung der Faserausrichtung und zur Illustration des Paradoxons, daß am Steg 6 die Feldlinien zwar stark konzentriert sind gegenüber Probe-Volumina aus einem Zahn 7, die Faserkonzentration jedoch gleichmäßig ist.

Erfindungsgemäße Zahnriemen erlauben gegenüber faserfreien Zahnriemen ohne Erhöhung der Riemenvorspannung bei gleicher Verzahnungsgeometrie und Riemenbreite ein um mindestens 25 % erhöhtes maximales Drehmoment. Da die Erfindung nach den bisher vorliegenden Versuchsergebnissen keine Senkung der höchstzulässigen Riemendrehzahl erfordert, ist um den gleichen Prozentsatz die maximal übertragbare Leistung und damit die Leistungsdichte gesteigert. Gegenüber den bislang bekannten faserbewehrten Zahnriemen zeigt sich eine leichte Erhöhung der maximalen Drehmomentübertragbarkeit bei bedeutender Senkung der Produktionskosten. Aufgrund dieser Verteilung zwischen den Vorteilen des Verfahrens und denen des Gegenstandes wurde der unabhängige Verfahrensanspruch als Anspruch 1 gewählt.

Das erfindungsgemäße Verfahren zur Herstellung erfindungsgemäßer Zahnriemen erfordert über die Faserzugabe hinaus kaum eine Änderungen der Mischungsrezepte; allenfalls empfiehlt sich bei großen Mischungslosgrößen eine Gabe an Vulkanisationsverzögerer, um der erhöhten Mischerbelastung gerecht zu werden. Im übrigen ist keine gravierende Änderung der teuren automatisierten Riemenaufbauvorrichtungen nötig.

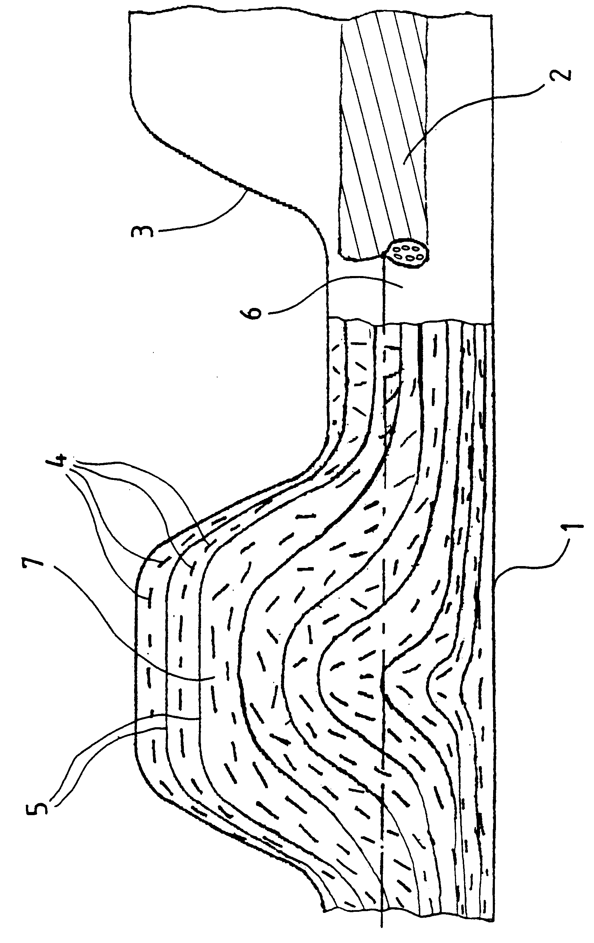

## Patentansprüche

1. Verfahren zur Herstellung von Zahnriemen, die neben den Festigkeitsträgern eines Zugstranges (2) und einem ggf. vorhandenem Armierungsgewebe im wesentlichen aus einer Polymermischung, z. B. dem Vulkanisat einer Mischung aus einem oder zwei miteinander verträglichen Kautschuken mit üblichen Füllstoffen und Vulkanisationshilfsmitteln oder einem Thermoplasten wie Polyurethan, bestehen, wobei ein aus im wesentlichen parallelen Festigkeitsträgern bestehender Zugstrang (2) gebildet wird, wonach durch die im wesentlichen parallel verlaufenden Festigkeitsträger des Zugstranges (2) von radial außen nach radial innen, bezogen auf einen über ein Zahnrad laufenden Riemen, eine einzige Polymermischung hindurch gedrückt wird,
**dadurch gekennzeichnet,** daß besagter Polymermischung vor dem Durchdrücken zwischen den Festigkeitsträgern des Zugstranges (2) hindurch Fasern (4) aus einem Längenbereich von 0.1 bis 5 mm in einer Konzentration in Polymer-Masseprozenten zwischen 0,5 % und 20 % beigemischt und so ausgerichtet werden, daß sie vor dem Durchdrücken im wesentlichen parallel zu den Festigkeitsträgern des Zugstranges (2) verlaufen.

2. Verfahren nach Anspruch 1 dadurch gekennzeichnet, daß die beigemischten Fasern (4) Aramid-Fasern sind.

3. Verfahren nach Anspruch 1 dadurch gekennzeichnet, daß die Fasern (4) vor dem Einbringen in die Polymermischung zu einer Pulpe verarbeitet werden.

4. Verfahren nach Anspruch 1 dadurch gekennzeichnet, daß mindestens 70 % oder mehr der in der faserhaltigen Polymermischung verwendeten Polymere voll- oder teihydrierter Nitrilkautschuk sind, d.h. daß das Verhältnis der Masse von HNBR zur Masse all der Mischungsanteile, die Polymer sind, also exclusiv insbesondere der Füllstoffe, mindestens 0,7 beträgt.

5. Verfahren nach Anspruch 1, wobei die Polymermischung in ihrem Polymeranteil zu mindestens 70 % ein Kautschuk, vorzugsweise gemäß Anspruch 4 voll- oder teilhydrierter Nitrilkautschuk ist, dadurch gekennzeichnet, daß in an sich bekannter Weise der Zugstrang (2) dadurch gebildet wird, daß ein oder mehrere Festigkeitsträger gegebenenfalls als mehrgängige Wendel auf eine an sich bekannte Riemen-Aufbautrommel aufgespult werden.

6. Verfahren nach Anspruch 1, wobei die Polymermischung in ihrem Polymeranteil zu mindestens 70 % ein Kautschuk, vorzugsweise gemäß Anspruch 4 voll- oder teilhydrierter Nitrilkautschuk ist, dadurch gekennzeichnet, daß in an sich bekannter Weise vor dem Aufspulen des Zugstranges (2) auf die als Form dienende Riemen-Aufbautrommel zunächst ein Armierungsgewebe auf die Form gelegt wird.

7. Verfahren nach Anspruch 1 dadurch gekennzeichnet, daß die faserhaltige Polymermischung extrudiert und/oder kalandriert wird und das Extrudat bzw. Kalandrat so auf den aufgespulten Festigkeitsstrang aufgelegt wird, daß die Extrusions- bzw. Kalandrierrichtung mit der Festigkeitsträgerrichtung zusammenfällt.

8. Verfahren nach Anspruch 1, bei dem ein nicht-thermoplastisches also ein zu vulkanisierendes Polymer verwendet wird, vorzugsweise nach Anspruch 4, dadurch gekennzeichnet, daß der Polymermischung vor dem Einmischen der Fasern (4) Vulkanisationsverzögerer beigegeben wird.

9. Zahnriemen, der neben den Festigkeitsträgern eines Zugstranges (2) und einem ggf. vorhandenen Armierungsgewebe im wesentlichen aus einer Polymermischung, z. B. dem Vulkanisat einer Mischung aus einem oder zwei miteinander verträglichen Kautschuken mit üblichen Füllstoffen und Vulkanisationshilfsmitteln oder einem Thermoplasten wie Polyurethan, besteht, wobei die Polymermischung in der Nähe der verzahnten Oberfläche Fasern (4) enthält,
**dadurch gekennzeichnet,** daß die Polymermischung der Zähne (7) nicht nur in der Nähe der verzahnten Oberfläche sondern in dem gesamten radialen Bereich von der verzahnten Oberfläche (3) bis hin zum Riemenrücken (1) Fasern (4) aus einem Längenbereich von 0.1 - 5 mm enthält, die, gemittelt über einer in Umfangsrichtung verlaufenden Schnittfläche des Zahnriemens, 0,5 % bis 6,5 % des Volumens einnehmen.

10. Zahnriemen nach Anspruch 9 dadurch gekennzeichnet, daß die Fasern (4) im Bereich der Zahnflanken im wesentlichen in Umfangsrichtung und parallel zu den Flanken verlaufen.

11. Zahnriemen nach Anspruch 10 dadurch gekennzeichnet, daß der Faserverlauf im Längsschnitt ein Feld einander ähnlicher Wellen darstellt, deren Amplitude von der, bezogen auf einen kompletten Zahnriementrieb, radial äußeren Peripherie (1), wo sie gleich 0 ist, nach radial innen hin linear zunimmt.

12. Zahnriemen nach Anspruch 9 dadurch gekennzeichnet, daß die Zähne (7) in an sich bekannter Weise im wesentlichen aus einer Kautschukmischung bestehen, deren Polymeranteil zu mindestens 70 % hydrierter oder teilhydrierter Nitrilkautschuk (HNBR) ist.

13. Zahnriemen nach Anspruch 12 dadurch gekennzeichnet, daß besagte Kautschukmischung zur Pulpe verarbeitete Aramid-Fasern enthält.

14. Zahnriemen nach Anspruch 9 dadurch gekennzeichnet, daß er Vulkanisationsverzögerer enthält.

## Claims

1. Method of manufacturing toothed belts which, in addition to comprising the reinforcing members of a train (2) and a reinforcing fabric which may possibly be provided, substantially comprise a polymer mixture, e.g. the vulcanisate of a mixture formed from one or two rubbers which are compatible with each other, with conventional fillers and vulcanisation adjuvants or a thermoplastic material such as polyurethane, a train (2) being formed which comprises substantially parallel reinforcing members, whereupon a single polymer mixture is urged through the reinforcing members of the train (2), which members extend substantially parallel, from radially externally to radially internally relative to a belt travelling over a toothed wheel, characterised in that fibres (4), selected from a length range of 0.1 to 5 mm, are added to said polymer mixture, prior to its being urged between the reinforcing members of the train (2), in a concentration in polymer percentages by weight of between 0.5 % and 20 % and are so aligned that they extend substantially parallel to the reinforcing members of the train (2) prior to being urged through.

2. Method according to claim 1, characterised in that the added fibres (4) are aramid fibres.

3. Method according to claim 1, characterised in that the fibres (4) are processed to form a pulp prior to being introduced into the polymer mixture.

4. Method according to claim 1, characterised in that at least 70 % or more of the polymers used in the fibre-containing polymer mixture are fully or partially hydrated nitrile rubber, i.e. that the ratio between the mass of HNBR and the mass of all of the mixture ingredients which are polymers, that is to say exclusively more especially of the fillers, is at least 0.7.

5. Method according to claim 1, wherein at least 70 % of the polymer content in the polymer mixture is a rubber, preferably a fully or partially hydrated nitrile rubber according to claim 4, characterised in that, in a manner known per se, the train (2) is formed by one or more reinforcing members being wound, possibly as a multiple-threaded coil, onto a belt building drum known per se.

6. Method according to claim 1, wherein at least 70 % of the polymer content in the polymer mixture is a rubber, preferably a fully or partially hydrated nitrile rubber according to claim 4, characterised in that, prior to the train (2) being wound onto the belt building drum, which serves as the mould, a reinforcing fabric is initially placed upon the mould in a manner known per se.

7. Method according to claim 1, characterised in that the fibre-containing polymer mixture is extruded and/or calendered, and the extrudate or calendrate respectively is so placed upon the wound-on reinforcing train that the extruding or calendering direction coincides with the reinforcing member direction.

8. Method according to claim 1, wherein a non-thermoplastic polymer, that is to say a polymer to be vulcanised, is used, preferably according to claim 4, characterised in that a vulcanisation retarder is added to the polymer mixture prior to the fibres (4) being intermixed.

9. Toothed belt which, in addition to comprising the reinforcing members of a train (2) and a reinforcing fabric which may possibly be provided, substantially comprises a polymer mixture, e.g. the vulcanisate of a mixture formed from one or two rubbers, which are compatible with each other, with conventional fillers and vulcanisation adjuvants or a thermoplastic material such as polyurethane, the polymer mixture containing fibres (4) in the vicinity of the toothed surface, characterised in that the polymer mixture of the teeth (7) contains fibres (4), selected from a length range of 0.1 - 5 mm, not only in the vicinity of the toothed surface but in the entire radial region from the toothed surface (3) to the belt rear (1), and such fibres occupy 0.5 % to 6.5 % of the volume averaged over a cut face of the toothed belt extending in the circumferential direction.

10. Toothed belt according to claim 9, characterised in that the fibres (4) in the region of the tooth flanks extend sustantially in the circumferential direction and parallel to the flanks.

11. Toothed belt according to claim 10, characterised in that the fibre configuration, when viewed in longitudinal section, represents a field of waves which are similar to one another and have an amplitude which increases linearly radially inwardly from the radially outer periphery, relative to a complete toothed belt drive, where it is equal to 0.

12. Toothed belt according to claim 9, characterised in that the teeth (7) substantially comprise in a manner known per se a rubber mixture, the polymer content of which is at least 70 % hydrated or partially hydrated nitrile rubber (HNBR).

13. Toothed belt according to claim 12, characterised in that said rubber mixture contains aramid fibres which have been processed to form a pulp.

14. Toothed belt according to claim 9, characterised in that it contains a vulcanisation retarder.

## Revendications

1. Procédé de fabrication de courroies crantées, qui se composent, en plus de supports à grande résistance mécanique d'une corde de traction (2) et d'un tissu d'armature éventuellement présent, essentiellement d'un mélange de polymères, par exemple du produit de vulcanisation d'un mélange d'un ou de deux caoutchoucs compatibles, qui contiennent les charges usuelles et les agents de vulcanisation, ou d'une matière thermoplastique telle que du polyuréthanne, une corde de traction (2) se composant essentiellement de supports parallèles à grande résistance mécanique étant formée et ensuite un unique mélange de polymères étant refoulé entre les supports à grande résistance mécanique de la corde de traction (2), qui sont sensiblement parallèles, radialement de l'extérieur vers l'intérieur radialement par rapport à une courroie passant sur une roue dentée,
caractérisé en ce que ledit mélange de polymères est additionné, avant le refoulement entre les supports à grande résistance mécanique de la corde de traction (2), de fibres (4) ayant une longueur comprise entre 0,1 et 5 mm, en une concentration en pour cent de la masse du polymère comprise entre 0,5% et 20% et qui sont orientées de manière qu'avant le refoulement, elles soient sensiblement parallèles aux supports à grande résistance mécanique de la corde de traction (2).

2. Procédé selon la revendication 1, caractérisé en ce que les fibres additionnées (4) sont des fibres d'aramide.

3. Procédé selon la revendication 1, caractérisé en ce qu'avant d'être introduites dans le mélange de polymères, les fibres sont traitées de manière à former une pâte.

4. Procédé selon la revendication 1, caractérisé en ce qu'au moins 70% ou davantage des polymères utilisés dans le mélange de polymères contenant des fibres sont du caoutchouc nitrile totalement ou partiellement hydraté, c'est à dire que le rapport de la masse de HNBR à la masse de toutes les fractions du mélange, qui sont des polymères, donc à l'exclusion en particulier de charges, est d'au moins 0,7.

5. Procédé selon la revendication 1, dans lequel le mélange de polymères est, dans sa fraction de polymères, à hauteur d'au moins 70% un caoutchouc, de préférence selon la revendication 4 un caoutchouc nitryle totalement ou partiellement hydraté, caractérisé en ce que, de manière connue, la corde de traction (2) est formée par le fait qu'un ou plusieurs supports à grande résistance mécanique sont enroulés sur un tambour de construction de courroie de type connu, éventuellement en hélice à plusieurs pas.

6. Procédé selon la revendication 1, dans lequel le mélange de polymères est, dans sa fraction de polymères, à hauteur d'au moins 70% un caoutchouc, de préférence un caoutchouc nitryle totalement ou partiellement hydraté selon la revendication 4, caractérisé en ce que, de manière connue, avant l'enroulement de la corde de traction (2) sur le tambour de construction de courroie servant de forme, un tissu d'armature est tout d'abord placé sur la forme.

7. Procédé selon la revendication 1, caractérisé en ce que le mélange de polymères contenant des fibres est extrudé et/ou calandré et le produit d'extrusion ou de calandrage est déposé sur la corde à grande résistance mécanique enroulée de manière que la direction d'extrusion ou de calandrage coïncide avec l'orientation des supports à grande résistance mécanique.

8. Procédé selon la revendication 1, suivant lequel un polymère non thermoplastique, donc devant être vulcanisé, est utilisé, de préférence selon la revendication 4, caractérisé en ce que des ralentisseurs de la vulcanisation sont additionnés au mélange de polymères avant l'addition des fibres (4).

9. Courroie crantée qui se compose, en plus des supports à grande résistance mécanique d'une corde de traction (2) et d'un tissu d'armature éventuellement présent, essentiellement d'un mélange de polymères, par exemple du produit de vulcanisation d'un mélange d'un ou de deux caoutchoucs compatibles contenant des charges usuelles et des agents de vulcanisation ou d'une matière thermoplastique telle que le polyuréthanne, le mélange de polymères contenant des fibres (4) à proximité de la surface crantée,
caractérisée en ce que le mélange de polymères des dents (7) contient non seulement à proximité de la surface crantée, mais dans la région radiale totale allant de la surface crantée (3) jusqu'au dos (1) de la courroie, des fibres (4) d'une longueur comprise entre 0,1 et 5 mm, qui occupent en moyenne, sur une surface en coupe orientée dans la direction de la circonférence de la courroie crantée, 0,5% à 6,5% du volume.

10. Courroie crantée selon la revendication 9, caractérisée en ce que les fibres (4) sont orientées dans la région des flancs des dents sensiblement dans la direction de la circonférence et parallèlement aux flancs.

11. Courroie crantée selon la revendication 10, caractérisée en ce que l'orientation des fibres en coupe longitudinale représente un champ d'ondes analogues dont l'amplitude augmente linéairement de la périphérie radialement extérieure (1), par rapport à une transmission à courroie crantée complète, où elle est nulle, radialement vers l'intérieur.

12. Courroie crantée selon la revendication 9, caractérisée en ce que les dents (7) consistent de manière connue essentiellement en un mélange de caoutchouc dont la fraction de polymère est à hauteur d'au moins 70% du caoutchouc nitryle (HNBR) hydraté ou partiellement hydraté.

13. Courroie crantée selon la revendication 12, caractérisée en ce que ledit mélange de caoutchouc contient des fibres d'aramides traitées de manière à devenir une pâte.

14. Courroie crantée selon la revendication 9, caractérisée en ce qu'elle contient des retardateurs de la vulcanisation.
